# EUROPÄISCHE PATENTSCHRIFT

(11) **EP 2 266 847 B1**
(45) Veröffentlichungstag und Bekanntmachung des Hinweises auf die Patenterteilung: **14.05.2014**
(21) Anmeldenummer: 10001876.1
(22) Anmeldetag: 24.02.2010
(51) Int. Cl.: B60R 21/34

(54) **Kraftfahrzeug mit einer Frontklappe**
Motor vehicle with a front bonnet
Véhicule automobile avec un capot

(30) Priorität: 03.06.2009 DE 102009023663
(43) Veröffentlichungstag der Anmeldung: 29.12.2010
(73) Patentinhaber: Audi AG, 85045 Ingolstadt (DE)
(72) Erfinder: Pickl, Richard, 85095 Denkendorf (DE)
(74) Vertreter: Engelhardt, Harald

(56) Entgegenhaltungen:
- EP-A1- 1 118 530
- CH-A5- 655 065
- DE-A1- 2 641 887
- US-A- 3 008 756
- US-A- 5 292 166
- US-A1- 2007 062 749

## Beschreibung

Die Erfindung bezieht sich auf ein Kraftfahrzeug mit einer Frontklappe und einer Einrichtung zum Schutz von auf die Frontklappe aufschlagender Fußgänger und Zweiradfahrer.

Die Realisierung eines Fußgängerschutzes erfordert eine Frontklappe, die einen ausreichenden Abstand zu nicht nachgiebigen Bauteilen im Motorraum des Fahrzeugs einhält. Um dies sicherzustellen, sind Einrichtungen bekannt, weiche die Frontklappe sensorgesteuert anheben. Natürlich wäre es auch möglich, die Frontklappe so anzuordnen, dass sie von den kritischen Stellen des Motors stets einen ausreichenden Abstand einnimmt. Durch eine dermaßen hoch liegende Frontklappe wird jedoch das äußere Erscheinungsbild des Fahrzeugs negativ beeinflusst.

Die CH 655065 A5 offenbart eine Einrichtung zum Schutz von auf die Frontklappe aufschlagenden Fußgängern, die aus einer über der Frontklappe angeordnetem Gitter besteht. Das Gitter dient als Haltemöglichkeit, in die ein aufschlagender Fußgänger hineingreifen kann, um sich dann am Fahrzeug festzuhalten.

Nachteilig hierbei ist jedoch, dass das Gitter keine Aufprallenergie absorbieren kann und der Fußgänger die gesamte Aufpraffenergie aufnehmen muss, nsbesondere dann, wenn er sich nicht am Gitter festhalten kann. Die unebene Struktur der Schutzeinrichtung kann sogar dazu führen, dass die Aufprallwirkung verstärkt wird, weil sich dadurch die Aufprallfläche zwischen Fußgänger und Fahrzeug verkleinert.

Der vorliegenden Erfindung liegt die Aufgabe zugrunde, ohne einen komplizierten Mechanismus zum Anheben der Frontklappe einen guten Schutz für Fußgänger und Zweiradfahrer zu gewährleisten.

Die Aufgabe wird dadurch gelöst, dass die Schutzeinrichtung ein flächiges Bauteil umfasst, welches zumindest im vorderen Bereich der Frontklappe angeordnet ist und sich abschnittsweise im Abstand über der Frontklappe erstreckt. Diese Ausgestaltung ermöglicht eine Frontklappe, die nur einen geringen Abstand zu den kritischen Motorbaufeilen einnimmt und trotzdem einen guten Schutz für Fußgänger und Zweiradfahrer ermöglicht, da die aufschlaggefährdeten Abschnitte im vorderen Bereich der Frontklappe durch das erfindungsgemäße flächige Bauteil überdeckt sind. Der Abstand des flächigen Bauteils von der Oberfläche der Frontklappe ist so gewählt, dass ein ausreichender Verformungsweg zur Verfügung steht.

Es ist zutreffend und nicht unerwünscht, dass die neue Gestaltung mit dem flächigen Bauteil über der Frontklappe dem damit ausgerüsteten Kraftfahrzeug ein neues Gepräge gibt. Diese Ausgestaltung kann neben dem Fußgängerschutz jedoch auch weitere technische Funktionen übernehmen, bspw. im Rahmen der Luftführung.

Das flächige Bauteil kann im vorderen Randbereich der Frontklappe befestigt sein und sich der Abstand des flächigen Bauteils zur Frontklappe von der Befestigungsstelle ausgehend zunehmend vergrößern. Es ist jedoch auch möglich, das flächige Bauteil so anzuordnen, dass es etwa parallel zur Außenkontur der Frontklappe verläufft. In diesem Falle ergibt sich zwischen der Frontklappe und dem flächigen Bauteil ein Spalt.

Eine Kombination der beiden vorstehend genannten Möglichkeiten besteht darin, dass sich der Abstand des flächigen Bauteils zur Frontklappe von der das erfindungsgemäße flächige Bauteil überdeckt sind. Der Abstand des flächigen Bauteils von der Oberfläche der Frontklappe ist so gewählt, dass ein ausreichender Verformungsweg zur Verfügung steht.

Es ist zutreffend und nicht unerwünscht, dass die neue Gestaltung mit dem flächigen Bauteil über der Frontklappe dem damit ausgerüsteten Kraftfahrzeug ein neues Gepräge gibt. Diese Ausgestaltung kann neben dem Fußgängerschutz jedoch auch weitere technische Funktionen übernehmen, bspw. im Rahmen der Luftführung.

Das flächige Bauteil kann im vorderen Randbereich der Frontklappe befestigt sein und sich der Abstand des flächigen Bauteils zur Frontklappe von der Befestigungsstelle ausgehend zunehmend vergrößern. Es ist jedoch auch möglich, das flächige Bauteil so anzuordnen, dass es etwa parallel zur Außenkontur der Frontklappe verläuft. In diesem Falle ergibt sich zwischen der Frontklappe und dem flächigen Bauteil ein Spalt.

Eine Kombination der beiden vorstehend genannten Möglichkeiten besteht darin, dass sich der Abstand des flächigen Bauteils zur Frontklappe von der Befestigungsstelle ausgehend zunehmend vergrößert und anschließend in einen zur Außenkontur der Frontklappe etwa parallelen Bereich übergeht.

Gemäß einer besonders vorteilhaften Ausgestaltung der Erfindung kann sich das flächige Bauteil vom vorderen Bereich der Frontklappe bis in die Seitenbereiche der Frontklappe erstrecken. Dadurch wird nicht nur eine optisch sehr ansprechende Form der Sicherheitseinrichtung geschaffen, sondern auch die Schutzwirkung verbessert. Die Übergänge vom vorderen Bereich des flächigen Bauteils in die sich anschließenden seitlichen Bereiche können durch große Radien erfolgen, wodurch sich ein sehr harmonisches Gesamtbild ergibt. Die seitlichen Bereiche können nach hinten zu spitz zulaufen und sich zunehmend an die Frontklappe anlegen.

Das erfindungsgemäße flächige Bauteil kann sehr kostengünstig als Blechpressteil ausgeführt sein, welches bereits im Rohbau mit der Frontklappe verbunden wird. Natürlich sind auch andere Materialien, die ggf. nachträglich montiert werden, denkbar.

Ein besonderer Effekt ergibt sich, wenn das flächige Bauteil farblich von der Frontklappe und/oder den angrenzenden Karosseriebauteilen abgesetzt ist.

Zusammenfassend ist festzustellen, dass die neuartige Sicherheitseinrichtung die Voraussetzung dafür schafft, ohne aufwändige Mechanik und eine höhere Anordnung der Frontklappe einen guten Schutz für Fußgänger und Zweiradfahrer zu schaffen. Die "Fußgängerschutzflächen" können in vielfältiger Weise gestaltet sein (Design) und ggf. weitere technische Aufgaben übernehmen. So kann bspw. das flächige Bauteil im vorderen Bereich der Frontklappe von dieser gleichmäßig beabstandet sein; die Befestigung erfolgt dann in den Seitenbereichen. Umgekehrt ist es möglich, das flächige Bauteil sowohl am vorderen, als auch an den seitlichen Rändern der Frontklappe festzulegen, so dass das flächige Bauteil außen umlaufend anliegt und im inneren Bereich umlaufend von der Frontklappe absteht.

Ein Ausführungsbeispiel der Erfindung ist in der Zeichnung dargestellt und wird nachfolgend näher beschrieben. Es zeigt
- Figur 1: in perspektivischer Darstellung den vorderen Bereich eines Kraftfahrzeugs mit einer Sicherheitseinrichtung zum Schutz von Fußgängern und Zweiradfahrern und
- Figur 2: den Schnitt II-II aus Figur 1.

Ein Kraftfahrzeug weist eine Frontklappe 3 auf, an der ein flächiges Bauteil 5 zur Bildung eines Schutzes für Fußgänger und Zweiradfahrer angeordnet ist.

Das flächige Bauteil 5 ist als Blechpressteil hergestellt und erstreckt sich bügelförmig über den vorderen Bereich der Frontklappe 3. Anschließend ist das flächige Bauteil 5 in die Seitenbereiche der Frontklappe 3 weitergeführt, wobei die Anschlussradien und die spitzen Ausläufe gleichmäßige und optisch ansprechende Übergänge an die anschließenden Bauteile gewährleisten.

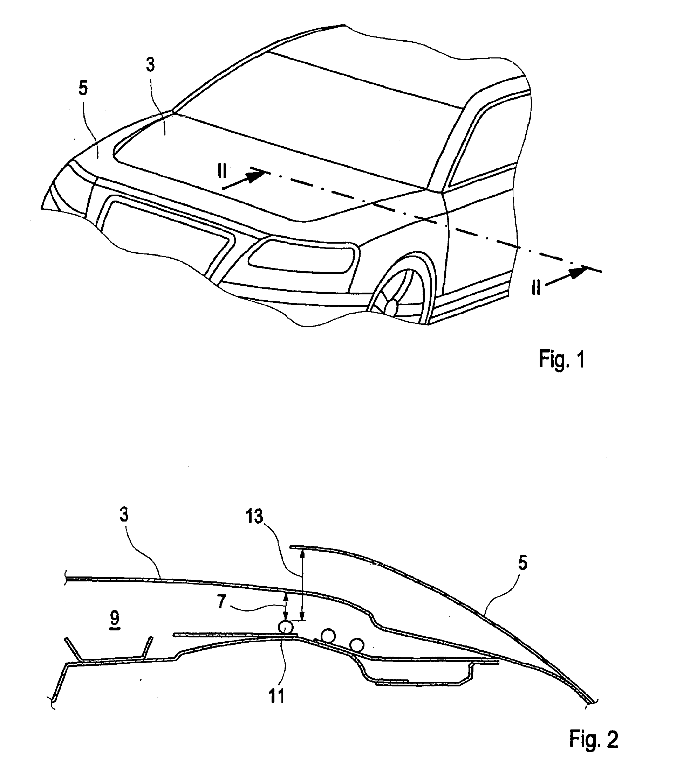

Die Schnittdarstellung in Figur 2 zeigt, wie durch das flächige Bauteil 5 der kritische Abstand (Pfeil 7) zu einem weit oben im Motorraum 9 angeordneten Bauteil 11 vergrößert wird (angedeutet durch einen Pfeil 13).

## Patentansprüche

1. Kraftfahrzeug mit einer Frontklappe und einer Einrichtung zum Schutz von auf die Frontklappe aufschlagender Fußgänger und Zweiradfahrer, **dadurch gekennzeichnet, dass** die Einrichtung ein flächiges Bauteil (5) aus Blech umfasst, welches zumindest im vorderen Bereich der Frontklappe (3) angeordnet ist und sich abschnittsweise im Abstand parallel zur Außenkontur der Frontklappe (3) über der Frontklappe (3) erstreckt.

2. Kraftfahrzeug nach Anspruch 1, **dadurch gekennzeichnet, dass** das flächige Bauteil (5) im vorderen Randbereich der Frontklappe (3) befestigt ist und sich der Abstand des flächigen Bauteils (5) zur Frontklappe (3) von der Befestigungsstelle ausgehend zunehmend vergrößert.

3. Kraftfahrzeug nach Anspruch 1, **dadurch gekennzeichnet, dass** das flächige Bauteil (5) etwa parallel zur Außenkontur der Frontklappe (3) verläuft.

4. Kraftfahrzeug nach Anspruch 1, **dadurch gekennzeichnet, dass** sich der Abstand des flächigen Bauteils (5) zur Frontklappe (3) von der Befestigungsstelle ausgehend zunehmend vergrößert und anschließend in einen zur Außenkontur der Frontklappe (3) etwa parallelen Bereich übergeht.

5. Kraftfahrzeug nach einem der Ansprüche 1 bis 4, **dadurch gekennzeichnet, dass** sich das flächige Bauteil (5) vom vorderen Bereich der Frontklappe (3) bis in die Seitenbereiche der Frontklappe (3) erstreckt.

6. Kraftfahrzeug nach Anspruch 5, **dadurch gekennzeichnet, dass** das flächige Bauteil (5) den oberen Bereich von sich an die Frontklappe (3) seitlich anschließenden Kotflügeln überdeckt.

7. Kraftfahrzeug nach einem der Ansprüche 1 bis 6, **dadurch gekennzeichnet, dass** das flächige Bauteil (5) als Blechpressteil ausgeführt ist.

8. Kraftfahrzeug nach einem der Ansprüche 1 bis 7, **dadurch gekennzeichnet, dass** das flächige Bauteil (5) farblich von der Frontklappe (3) und/oder angrenzenden Karosseriebauteilen abgesetzt ist.

## Claims

1. Motor vehicle comprising a front bonnet and a device for protecting pedestrians and cyclists who strike the front bonnet, **characterised in that** the device comprises a planar, sheet-metal component (5) which is arranged at least in the front region of the front bonnet (3) and of which portions extend, at a distance, over the front bonnet (3), parallel to the outer counter of the front bonnet (3).

2. Motor vehicle according to claim 1, **characterised in that** the planar component (5) is attached in the front edge region of the front bonnet (3) and, starting from the attachment site, the distance of the planar component (5) from the front bonnet (3) gradually increases.

3. Motor vehicle according to claim 1, **characterised in that** the planar component (5) extends substantially parallel to the outer contour of the front bonnet (3).

4. Motor vehicle according to claim 1, **characterised in that**, starting from the attachment site, the distance of the planar component (5) from the front bonnet (3) gradually increases and then transitions into a region substantially parallel to the outer contour of the front bonnet (3).

5. Motor vehicle according to any of claims 1 to 4, **characterised in that** the planar component (5) extends from the front region of the front bonnet (3) as far as the lateral regions of the front bonnet (3).

6. Motor vehicle according to claim 5, **characterised in that** the planar component (5) covers the upper region of fenders which are laterally joined to the front bonnet (3).

7. Motor vehicle according to any of claims 1 to 6, **characterised in that** the planar component (5) is constructed as a sheet-metal pressed part.

8. Motor vehicle according to any of claims 1 to 7, **characterised in that** the planar component (5) contrasts in colour to the front bonnet (3) and/or contiguous body components.

## Revendications

1. Véhicule automobile équipé d'un capot avant et d'un dispositif servant à protéger les piétons et cyclistes venant heurter le capot avant, **caractérisé en ce que** le dispositif comprend un élément constitutif (5) plat en tôle, qui est disposé au moins dans la zone avant du capot avant (3) et qui s'étend par endroits à distance de manière parallèle par rapport au contour extérieur du capot avant (3) sur le capot avant (3).

2. Véhicule automobile selon la revendication 1, **caractérisé en ce que** l'élément constitutif (5) plat est fixé dans la zone de bord avant du capot avant (3), et **en ce que** la distance de l'élément constitutif (5) plat par rapport au capot avant (3) devient de plus en plus importante en partant de l'emplacement de fixation.

3. Véhicule automobile selon la revendication 1, **caractérisé en ce que** l'élément constitutif (5) plat s'étend à peu près de manière parallèle par rapport au contour extérieur du capot avant (3).

4. Véhicule automobile selon la revendication 1, **caractérisé en ce que** la distance de l'élément constitutif (5) plat par rapport au capot avant (3) devient de plus en plus importante en partant de l'emplacement de fixation pour atteindre par la suite une zone à peu près parallèle par rapport au contour extérieur du capot avant (3).

5. Véhicule automobile selon l'une quelconque des revendications 1 à 4, **caractérisé en ce que** l'élément constitutif (5) plat s'étend de la zone avant du capot avant (3) jusque dans les zones latérales du capot avant (3).

6. Véhicule automobile selon la revendication 5, **caractérisé en ce que** l'élément constitutif (5) plat recouvre la zone supérieure de garde-boue se raccordant latéralement au capot avant (3).

7. Véhicule automobile selon l'une quelconque des revendications 1 à 6, **caractérisé en ce que** l'élément constitutif (5) plat est réalisé sous la forme d'une tôle pressée.

8. Véhicule automobile selon l'une quelconque des revendications 1 à 7, **caractérisé en ce que** la couleur de l'élément constitutif (5) plat contraste avec celle du capot avant (3) et/ou des éléments de carrosserie adjacents.
